# EUROPÄISCHE PATENTSCHRIFT

(11) **EP 3 069 101 B1**
(45) Veröffentlichungstag und Bekanntmachung des Hinweises auf die Patenterteilung: **21.11.2018**
(21) Anmeldenummer: 14759212.5
(22) Anmeldetag: 08.09.2014
(51) Int. Cl.: G01B 21/20, G01B 21/14, G01B 7/13, G01B 13/10

(54) **VERFAHREN ZUR VERMESSUNG VON MESSOBJEKTEN**
METHOD FOR MEASURING MEASUREMENT OBJECTS
PROCÉDÉ DE MESURE D'OBJETS À MESURER

(30) Priorität: 20.12.2013 DE 102013114667; 21.02.2014 DE 102014102261
(43) Veröffentlichungstag der Anmeldung: 21.09.2016
(73) Patentinhaber: STOTZ FEINMESSTECHNIK GmbH, 70839 Gerlingen (DE)
(72) Erfinder: STAMENKOVIC, Milan, 70469 Stuttgart (DE)
(74) Vertreter: Manitz Finsterwald Patentanwälte PartmbB
(86) Internationale Anmeldenummer: PCT/EP2014/069024
(87) Internationale Veröffentlichungsnummer: WO 2015/090651

(56) Entgegenhaltungen:
- EP-A2- 2 378 242
- US-A1- 2003 184 737
- US-A1- 2007 153 296
- US-A1- 2010 149 524
- US-A1- 2011 107 611
- US-A1- 2011 270 562

## Beschreibung

Die vorliegende Erfindung betrifft ein Verfahren zur industriellen Vermessung von Messobjekten wie Werkstücken gemäß dem Oberbegriff des Anspruchs 1.

Ein solches Verfahren kann mit einer Vorrichtung zur industriellen Vermessung von Messobjekten durchgeführt werden, die eine an das Messobjekt heranführbare Messsonde aufweist, an der wenigstens ein Abstandssensor vorgesehen ist, mit dem der momentane Abstand eines Bezugspunkts der Messsonde von einer Wand des Messobjekts bestimmbar ist, wobei die Messsonde drehbar an einem Halter gelagert ist. Der Halter kann gegenüber dem Messobjekt fixiert sein. Grundsätzlich ist es zum Durchführen einer Messung jedoch ausreichend, wenn die Position des Halters relativ zu dem Messobjekt bekannt ist. Eine Auswerteeinrichtung der Vorrichtung kann dazu ausgebildet sein, im Rahmen einer Messung wenigstens einen von dem Abstandssensor bestimmten Abstandswert zu empfangen und einer Drehstellung der Messsonde zuzuordnen. Speziell kann die Auswerteeinrichtung der Vorrichtung dazu ausgebildet sein, im Verlauf einer Drehung der Messsonde eine Anzahl an aufeinanderfolgend bestimmten Abstandswerten oder Abstandsdaten zu empfangen.

Derartige Vorrichtungen dienen in vielen Bereichen der industriellen Messtechnik dazu, Werkstücke hinsichtlich ihrer Formgenauigkeit zu überprüfen. Ein spezielles Anwendungsgebiet ist die Überprüfung der Formgenauigkeit von Zylinderbohrungen in Motorblöcken von Brennkraftmaschinen. Bei dem Abstandssensor kann es sich insbesondere um eine pneumatische Messdüse handeln, da pneumatische Messdüsen auch unter rauen Bedingungen zuverlässige Abstandsermittlungen ermöglichen. Vorzugsweise ist die Messsonde neigungsveränderlich am Halter gelagert, wobei Mittel zur Bestimmung der Neigung und zum Kompensieren von Eigenbewegungen und Fehlstellungen der Messsonde anhand der bestimmten Neigung vorgesehen sind. Messvorrichtungen der eingangs genannten Art sind beispielsweise in der DE 10 2010 014 817 A1 offenbart.

Beim Formhonen werden Zylinderbohrungen in einem Motorblock nicht mit der gewünschten Idealform gefertigt, sondern mit einer inversen Verzugsgeometrie, damit die Bohrungen erst nach der Montage und einer betriebsbedingten Erwärmung des Motorblocks aufgrund des entsprechenden Verzugs die Idealform annehmen. Im Zusammenhang mit dem Formhonen ist es demzufolge bedeutsam, nicht allein die Rundheit oder die Rundheitsabweichung einer Bohrung zu überprüfen, sondern deren vollständigen Formverlauf möglichst schnell, exakt und zuverlässig zu ermitteln.

Der Begriff "Bohrung" steht hier und im Folgenden für beliebig geformte, in ein Messobjekt eingebrachte Ausnehmungen oder Ausschnitte. Auf verschiedenen Gebieten der Technik stellt sich die Aufgabe, den dreidimensionalen Formverlauf von Bohrungen zu ermitteln, auch wenn deren Form relativ stark von einer Zylinderform abweicht.

Vorrichtungen der eingangs genannten Art werden auch zum Durchführen von Außenmessungen eingesetzt, beispielsweise zum Bestimmen des Formverlaufs der Oberfläche von schaft-, spindel- oder kolbenartigen Werkstücken. Während zum Vermessen von Bohrungen vorzugsweise eine als Messdorn ausgeführte Messsonde vorgesehen ist, kann zum Durchführen von Außenmessungen insbesondere ein Messring als Messsonde vorgesehen sein.

Damit die Messsonde an einer gewünschten Stelle in der Umgebung des Messobjekts platziert werden kann, ist es erforderlich, den Halter mit der Messsonde an einem verstellbaren Träger anzubringen, der z.B. einem Linearführungssystem oder einer 3D-Positioniereinrichtung zugeordnet sein kann. Dieser Träger kann an einem Grundgestell der zugehörigen Prüfeinrichtung verankert, d.h. "geerdet", sein. Auch das Messobjekt, also z.B. der Motorblock mit den zu vermessenden Bohrungen, ist üblicherweise gegenüber einem Grundgestell der Prüfeinrichtung fixiert.

In der Praxis hat es sich herausgestellt, dass es während der Vermessung eines Messobjekts zu Änderungen der Relativposition zwischen dem Träger und dem Messobjekt und somit zwischen dem Halter der Messsonde und dem Messobjekt kommen kann. Solche Lageänderungen verfälschen unweigerlich das Messergebnis.

Die EP 2 378 242 A2 offenbart eine Messvorrichtung mit einem Halter und einer drehbaren Messsonde. Die momentane Position des Halters relativ zum Werkstück kann mit Sensoren erfasst werden.

In der US 2011/0107611 A1 ist eine Koordinatenmessmaschine mit einer Gelenkarmanordnung offenbart, die mit einem Neigungssensor ausgestattet ist. Der Neigungssensor gibt ein Warnsignal aus, wenn sich das Grundgestell der Vorrichtung zu stark bewegt.

Die US 2011/0270562 A1 offenbart eine Vermessungsvorrichtung mit einem optischen Sensor, der am Ende einer Gelenkarmanordnung montiert ist. An dem Sensorkopf kann ein Beschleunigungssensor fixiert sein, um eine Auslenkung des Kopfes zu detektieren.

In der US 2010/0149524 A1 ist ein 3D-Sensor offenbart, an dessen Gehäuse drei Reflektoren angebracht sind. Ein Lasertracker ermittelt die Positionen der drei Reflektoren, um die Absolutposition des Sensors im Raum zu ermitteln.

Die US 2003/0184737 A1 offenbart einen optoelektronischen Sensor, der zum Erkennen von Strichcodes vorgesehen ist. Um die räumliche Position des Sensors zu ermitteln, kann dieser mit einem Neigungssensor versehen sein. US 2007/153296 A1 offenbart ein Gerät zur Vermessung der Ohrmuschel eines Probanden mittels eines konfokalen optischen Systems.

Es ist eine Aufgabe der Erfindung, eine schnelle, exakte und zuverlässige Bestimmung des Formverlaufs von beliebig geformten Messobjekten zu ermöglichen. Die Lösung der Aufgabe erfolgt durch ein Verfahren mit den Merkmalen des Anspruchs 1.

Erfindungsgemäß werden während der Messung auftretende Änderungen der Relativposition zwischen dem Halter und dem Messobjekt bestimmt, wobei anhand der bestimmten Änderungen der Relativposition zwischen dem Halter und dem Messobjekt eine Korrektur der Messung durchgeführt wird.

Vorzugsweise werden zum Durchführen der Korrektur Eigenbewegungen des Halters und/oder des Messobjekts kompensiert. Hierdurch wird eine besonders genaue Messung ermöglicht.

Hierfür können an einer entsprechenden Vorrichtung Mittel zum Bestimmen einer während einer Messung auftretenden Änderung der Relativposition zwischen dem Halter und dem Messobjekt vorgesehen sein. Die Auswerteeinrichtung kann außerdem dazu ausgebildet sein, anhand der bestimmten Positionsänderungen eine Korrektur der Messung in dem Sinne durchzuführen, dass Eigenbewegungen des Halters und/oder des Messobjekts wie z. B. Vibrationen "herausgerechnet" werden. Die Erfindung beruht u. a. auf der Erkenntnis, dass es nicht zwingend notwendig ist, die Absolutposition des Halters oder des zugehörigen Trägers fortlaufend zu ermitteln. Vielmehr reicht es aus, lediglich die während einer Messung auftretenden Abweichungen oder Änderungen der Position des Halters zu ermitteln. Solche Positionsänderungen können messtechnisch relativ einfach erfasst werden, beispielsweise mittels Beschleunigungssensoren.

Vorzugsweise ist die Auswerteeinrichtung dazu ausgebildet, anhand der bestimmten Änderung der Relativposition zwischen dem Halter und dem Messobjekt eine Korrektur der Messung durchzuführen, insbesondere wobei das Durchführen der Korrektur ein Kompensieren von Eigenbewegungen des Halters und/oder des Messobjekts umfasst. Somit werden unerwünschte Beeinflussungen der Messung durch Eigenbewegungen des Halters und des Messobjekts vermieden.

Die Mittel zum Bestimmen einer während der Messung auftretenden Änderung der Relativposition zwischen dem Halter und dem Messobjekt können wenigstens einen an dem Halter oder an einem mit diesem lagefest verbundenen Trägerbauteil angebrachten Beschleunigungssensor umfassen. Dies ermöglicht eine einfache und zuverlässige Bestimmung von Bewegungen des Halters und des Messobjekts.

Eine Ausführungsform der Erfindung sieht vor, dass an dem Halter oder an dem Trägerbauteil wenigstens ein Paar aus zwei in einer gemeinsamen Ebene angeordneten und bezüglich einer Rotationsachse der Messsonde um einen Drehwinkel, vorzugsweise um 90°, zueinander versetzten Beschleunigungssensoren angebracht ist, insbesondere wobei wenigstens zwei solche Paare an dem Halter oder an dem Trägerbauteil angebracht sind, welche in Richtung der Rotationsachse voneinander beabstandet sind. Durch ein solches Paar von drehversetzten Beschleunigungssensoren kann eine zweidimensionale Bewegung des Halters oder des Trägerbauteils in der betreffenden Ebene ermittelt werden.

Gemäß einer speziellen Ausgestaltung der Erfindung ist der oder jeder Beschleunigungssensor zum Erfassen der Beschleunigung des Halters oder des Trägerbauteils in einer bezüglich der Rotationsachse radialen Richtung ausgebildet und angeordnet. Die Verwendung eindimensionaler Beschleunigungssensoren ist besonders kostengünstig.

Die Mittel zum Bestimmen einer während der Messung auftretenden Änderung der Relativposition zwischen dem Halter und dem Messobjekt können ferner wenigstens einen am Messobjekt angebrachten Beschleunigungssensor umfassen. Ein am Messobjekt angebrachter Beschleunigungssensor kann Eigenbewegungen des Messobjekts ermitteln und so die Messgenauigkeit der Vermessungsvorrichtung erhöhen. Die Befestigung des Beschleunigungssensors am Messobjekt kann beispielsweise mittels einer Vakuumsaugeinrichtung erfolgen.

Es kann vorgesehen sein, dass der oder jeder Beschleunigungssensor als dreidimensionaler Sensor ausgebildet ist, um die Zuverlässigkeit der Messung weiter zu erhöhen.

Die Auswerteeinrichtung kann dazu ausgebildet sein, einen von dem Beschleunigungssensor empfangenen Beschleunigungswert zweimal zu integrieren und gegebenenfalls jeweilige Integrationskonstanten zu bestimmen. Die erste Integration ergibt hierbei einen Geschwindigkeitswert, während die zweite Integration einen Wert für den zurückgelegten Weg ergibt. Die Integrationskonstanten können anhand von Randbedingungen bestimmt werden. Somit können die sensorisch erfassten Beschleunigungswerte in Positionsänderungen des Halters, des Trägerbauteils oder des Messobjekts umgerechnet werden.

Grundsätzlich ist es von Vorteil, die Anzahl der verwendeten Beschleunigungssensoren gerade so groß zu wählen, dass eine Wegbestimmung durch zweifache Integration eindeutig ist. Für eine solche eindeutige Bestimmbarkeit kann z. B. ein einzelner dreidimensionaler Sensor, der an einem starren Körper angebracht ist und eine entsprechende Leistungsfähigkeit aufweist, ausreichend sein. Aus Kostengründen ist es bevorzugt, lediglich so viele Sensoren wie nötig zu verwenden.

Eine weitere Ausführungsform der Erfindung sieht vor, dass die Mittel zum Bestimmen einer während der Messung auftretenden Änderung der Relativposition zwischen dem Halter und dem Messobjekt wenigstens ein von dem Halter getrenntes und bezüglich des Messobjekts lagefestes Tragelement, insbesondere eine Stange, umfassen, wobei an dem Tragelement wenigstens ein Neigungssensor zum Ermitteln einer Neigung des Tragelements sowie wenigstens ein Abstandssensor zum Erfassen eines Abstands des Tragelements von dem Halter, von einem mit diesem lagefest verbundenen Trägerbauteil und/oder von dem Messobjekt an dem Tragelement angebracht sind. Eine derartige Anordnung kann eine Positionsermittlungseinrichtung zum zusätzlichen separaten Ermitteln der Positionsänderung des Halters oder des Trägerbauteils relativ zum Messobjekt bilden. Die Messgenauigkeit kann hierbei durch Redundanz erhöht werden. Prinzipiell kann eine Positionsermittlungseinrichtung wie vorstehend beschrieben auch zum eigenständigen Ermitteln von Positionsänderungen vorgesehen sein, wobei auf weitere Sensoren verzichtet wird.

An dem Tragelement können wenigstens zwei, vorzugsweise wenigstens drei, voneinander beabstandet angeordnete Neigungssensoren und/oder wenigstens zwei, vorzugsweise wenigstens drei, voneinander beabstandet angeordnete Abstandssensoren angebracht sein, um eine ausreichende Messgenauigkeit zu gewährleisten.

Ferner kann wenigstens ein weiteres Tragelement mit wenigstens einem Neigungssensor und wenigstens einem Abstandssensor vorgesehen sein, welches bezüglich einer Rotationsachse der Messsonde um einen Drehwinkel, vorzugsweise um 90°, zu dem anderen Tragelement versetzt angeordnet ist. Durch die drehversetzte Abstandsmessung kann die zweidimensionale Position des Halters, des Trägerbauteils oder des Messobjekts in der betreffenden Ebene ermittelt werden.

Die Auswerteeinrichtung kann dazu ausgebildet sein, im Verlauf einer Drehung der Messsonde einen Satz von aufeinanderfolgend bestimmten Abstandswerten oder Abstandsdaten zu empfangen. Dies ermöglicht es, nicht nur die Rundheit oder die Rundheitsabweichung eines Messobjekts, sondern dessen genaue Form zu ermitteln. Die bestimmten Abstandswerte können dazu verwendet werden, ein grafisch darstellbares Gitternetz des Messobjekts zu erstellen, um so eine Visualisierung der Form oder der Formabweichungen des Messobjekts zu ermöglichen. Weiterbildungen der Erfindung sind auch in den abhängigen Ansprüchen, der Beschreibung sowie der Zeichnung angegeben.

Die Erfindung wird im Folgenden beispielhaft unter Bezugnahme auf die Zeichnungen beschrieben.
- Fig. 1: ist eine seitliche Schnittansicht einer Vorrichtung zur Vermessung von Bohrungen.
- Fig. 2: ist eine perspektivische Ansicht der Vorrichtung gemäß Fig. 1.
- Fig. 3: zeigt einen mittels der Vorrichtung gemäß Fig. 1 ermittelten Formverlauf einer Bohrung gemeinsam mit einem vorgegebenen Toleranzbereich sowie einem Hüllkreis und einem Pferchkreis.
- Fig. 4: zeigt einen mittels der Vorrichtung gemäß Fig. 1 ermittelten dreidimensionalen Formverlauf einer Bohrung in Form eines Gitternetzes.
- Fig. 5: ist eine seitliche Schnittansicht einer Vorrichtung zur Vermessung von Spindeln oder Schäften.

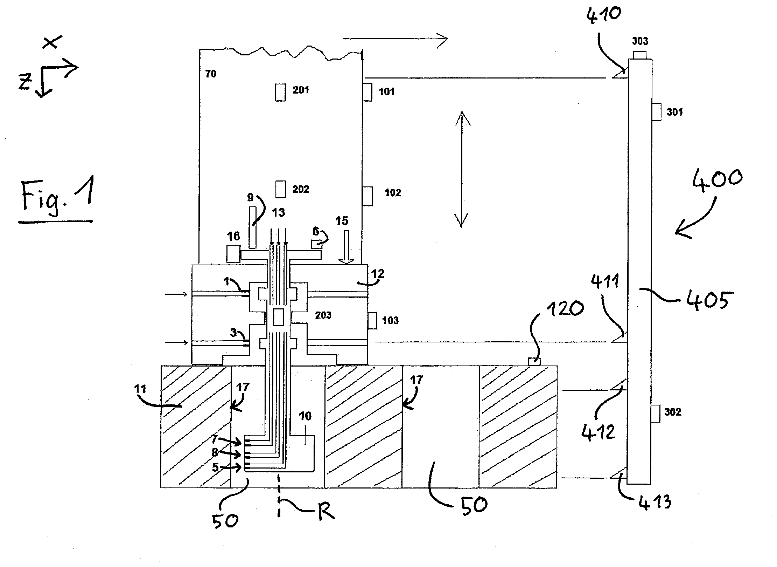

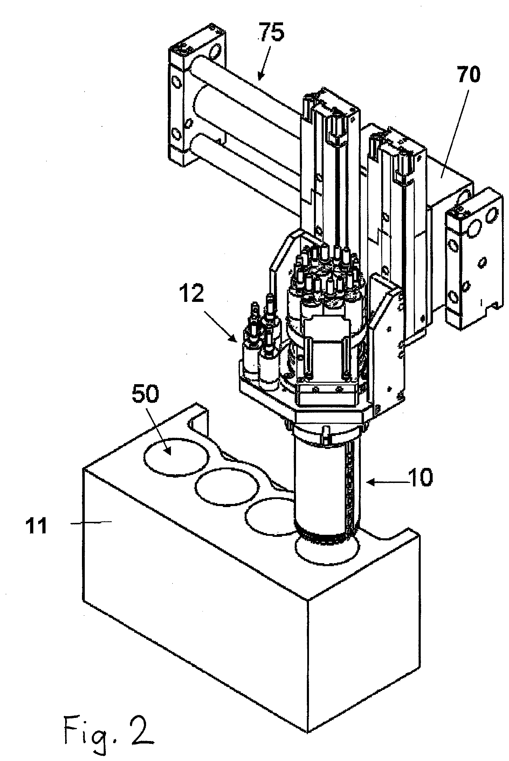

Die in Fig. 1 gezeigte Messvorrichtung umfasst eine stabförmige, abschnittsweise zylindrische Messsonde 10, welche drehbar und bevorzugt neigungsveränderlich an einem hier ringförmigen Halter 12 gelagert ist. Der Halter 12 ist an einem Träger 70 befestigt, der einer in Fig. 2 genauer dargestellten Linearführung 75 eines 3D-Portals zugeordnet ist.

Die Rotationsachse R, um welche die Messsonde 10 relativ zu dem Halter 12 drehbar ist, fällt vorzugsweise mit der Längsmittelachse der Messsonde 10 zusammen. An der Messsonde 10 sind drei messsondenseitige Abstandssensoren 5, 7, 8 vorgesehen, welche jeweils dazu ausgebildet sind, die momentane Entfernung zwischen der Messsonde 10 und einer Wand 17 des zu vermessenden Messobjekts 11 in bezüglich der Rotationsachse R radialer Richtung zu erfassen. Die Abstandssensoren 5, 7 und 8 sind hier als pneumatische Messdüsen ausgebildet, welche durch Kanäle mit Druckluft beaufschlagbar sind. Ferner sind die Abstandssensoren 5, 7 und 8 jeweils fest mit der Messsonde 10 verbunden. Mittels eines Drehwinkelsensors 6 kann der momentane Drehwinkel der Messsonde 10 bezüglich der Rotationsachse R bestimmt werden. Bei Bedarf können auch mehr als drei Abstandssensoren 5, 7, 8 an der Messsonde 10 vorgesehen sein. Außerdem können die messsondenseitigen Abstandssensoren 5, 7, 8 nicht nur einen Höhenversatz, sondern auch einen Winkelversatz um die Rotationsachse R aufweisen.

Durch die Höhenlage eines Abstandssensors 5, 7, 8 ist gewissermaßen eine Messebene definiert. Je nach Anwendungsvorgabe kann eine Messvorrichtung zwanzig Messebenen und mehr aufweisen. Die Anordnung der Messebenen entlang der Rotationsachse R muss hierbei nicht zwingend äquidistant sein. Vielmehr kann sich die Anzahl der Messebenen in einem bestimmten Abschnitt der Messsonde 10 nach der zu erwartenden Verformung des Messobjekts 11 in diesem Abschnitt richten. Falls in einem bestimmten Abschnitt kaum mit nennenswerten Verformungen zu rechnen ist, ist es aus Kostengründen günstig, hier nur wenige Messebenen vorzusehen. Hingegen sollten in einem Abschnitt, in welchem stärkere Verformungen zu erwarten sind, möglichst viele Messebenen vorgesehen werden. Das gleichzeitige Messen in mehreren Messebenen ermöglicht eine wesentlich schnellere Vermessung eines Messobjekts 11 als dies beispielsweise mittels einer einzeln zu bewegenden Tastkugel möglich ist.

Weiterhin sind zwei halterseitige Abstandssensoren 1, 3 vorgesehen, mittels welcher die aktuelle Position und/oder die aktuelle Neigung der Messsonde 10 relativ zu dem Messobjekt 11 bestimmbar ist. Zu diesem Zweck sind die halterseitigen Abstandssensoren 1, 3, welche hier ebenfalls als pneumatische Messdüsen ausgeführt sind, fest mit dem Halter 12 verbunden. Vorzugsweise sind zwei weitere, in Fig. 1 nicht sichtbare halterseitige Abstandssensoren vorgesehen, welche in einer rechtwinklig zur Papierebene verlaufenden Ebene von der Rotationsachse R beabstandet sind. Im Übrigen können die Messsonde 10 und der Halter 12 wie in der DE 10 2010 014 817 A1 offenbart ausgestaltet sein.

Zum Durchführen einer Vermessung wird die Messsonde 10 zumindest einmal vollständig, d.h. um 360°, um die Rotationsachse R gedreht, wobei die messsondenseitigen Abstandssensoren 5, 7, 8 während des Drehens kontinuierlich oder in wiederholten Einzelschritten die Abstände zwischen der Messsonde 10 und der Wand 17 erfassen und der Drehwinkelsensor 6 die jeweils zugehörigen Drehstellungen der Messsonde 10 erfasst. Eine mehrfache vollständige Drehung der Messsonde 10 um die Rotationsachse R kann bei Bedarf zur Erhöhung der Messgenauigkeit und insbesondere zur Rauschunterdrückung durchgeführt werden.

Sofern sich die Position und die Neigung der Messsonde 10 relativ zu dem Halter 12 während des Drehens nicht ändert, kann aufgrund der durch die Abstandssensoren 5, 7, 8 ermittelten Abstandswerte und der diesen zugeordneten, durch den Drehwinkelsensor 6 ermittelten Drehwinkelwerte der Formverlauf der Bohrung 50 bestimmt werden.

Wenn sich die Position und/oder die Neigung der Messsonde 10 relativ zu dem Halter 12 während des Drehens ändert, sorgt eine in den Figuren nicht dargestellte Auswerteeinrichtung dafür, dass die durch die messsondenseitigen Abstandssensoren 5, 7, 8 ermittelten Abstandswerte anhand der von den halterseitigen Abstandssensoren 1, 3 ermittelten Abstandswerte korrigiert werden. Auf diese Weise können insbesondere etwaige Taumelbewegungen der Messsonde 10 kompensiert werden. Die Messsonde 10 ist mittels eines motorisierten Linearschlittens 9 relativ zu dem Halter 12 höhenverstellbar. Somit kann die Messsonde 10 mittels des Linearschlittens 9 in einer beliebigen Höhe relativ zu dem Messobjekt 11, d.h. in einer beliebigen Tiefe der Bohrung 50, positioniert werden, um so die Bohrung 50 dreidimensional zu vermessen.

Um während der Messung auftretende Änderungen der Position des Halters 12 relativ zum Messobjekt 11 zu ermitteln, sind vier Beschleunigungssensoren 101, 102, 201, 202 am Träger 70 angebracht. Während die beiden im Bild rechts befindlichen Beschleunigungssensoren 101, 102 Beschleunigungen des Trägers 70 in x-Richtung erfassen, dienen die beiden im Bild links befindlichen Beschleunigungssensoren 201, 202 dazu, Beschleunigungen des Trägers 70 in der aus der Papierebene ragenden y-Richtung zu erfassen. Grundsätzlich könnte auch wenigstens ein in z-Richtung wirkender Beschleunigungssensor vorgesehen sein, was in Fig. 1 jedoch nicht dargestellt ist. Um die Zuverlässigkeit der Messung durch Redundanz zu erhöhen, sind auch am Halter 12 entsprechende Beschleunigungssensoren 103, 203 angebracht - jeweils einer in x-Richtung und einer in y-Richtung wirkend. Da im Allgemeinen der Drehpunkt einer eventuellen Neigungsänderung des Trägers 70 bzw. des Halters 12 im Raum nicht bekannt ist, ist es bevorzugt, sowohl in x-Richtung als auch in y-Richtung wenigstens zwei voneinander beabstandete Beschleunigungssensoren vorzusehen. Prinzipiell könnten auch ein oder mehrere dreidimensionale Beschleunigungssensor(en) vorgesehen sein. Ein am Messobjekt 11 angebrachter Beschleunigungssensor 120, der vorzugsweise als 3D-Sensor ausgeführt ist, ermittelt Positionsänderungen des Messobjekts 11 und dient einer weiteren Erhöhung der Messgenauigkeit. Der messobjektseitige Beschleunigungssensor 120 kann beispielsweise mittels einer Vakuumsaugeinrichtung am Messobjekt 11 befestigt sein.

Die Auswerteeinrichtung ist in der Lage, die von den Beschleunigungssensoren 101, 102, 103, 120, 201, 202, 203 ermittelten Beschleunigungswerte jeweils zweimal zu integrieren und jeweilige Integrationskonstanten zu bestimmen. Die erste Integration ergibt hierbei einen Geschwindigkeitswert, während die zweite Integration einen Wert für den zurückgelegten Weg ergibt. Somit können mit der dargestellten Anordnung von Beschleunigungssensoren 101, 102, 103, 120, 201, 202, 203 jegliche Positionsänderungen des Trägers 70 bzw. des an ihm fixierten Halters 12 relativ zum Messobjekt 11 im Verlauf einer Messung ermittelt und zur Kompensation von Messfehlern bei der Bestimmung des Formverlaufs herangezogen werden.

Es ist darauf hinzuweisen, dass in z-Richtung verlaufende Änderungen der Position des Halters 12 relativ zum Messobjekt 11 die Messwerte wesentlich weniger beeinflussen als radiale Positionsänderungen, also z.B. Verschiebungen des Halters 12 in x-Richtung. Dies gilt insbesondere im Fall pneumatischer Messdüsen, da diese nicht wie ein Tastkörper punktuell messen, sondern gemittelt über einen größeren Messbereich. Demgemäß ist auch die Auflösung der Beschleunigungssensoren 101, 102, 103, 120, 201, 202, 203 in den verschiedenen Richtungen unterschiedlich wichtig und kann dementsprechend unterschiedlich gewählt werden. Unter Umständen muss in der z-Richtung überhaupt keine Korrektur durchgeführt werden, sodass für die z-Richtung kein Sensor benötigt wird.

Die im Bild rechts neben dem Träger 70 befindliche Positionsermittlungseinrichtung 400 kann zum zusätzlichen separaten Ermitteln der Positionsänderung des Trägers 70 bzw. des Halters 12 relativ zum Messobjekt 11 dienen. Die Positionsermittlungseinrichtung 400 kann jedoch prinzipiell auch anstelle der Beschleunigungssensoren 101, 102, 103, 120, 201, 202, 203 zum Ermitteln solcher Positionsänderungen vorgesehen sein. Die Positionsermittlungseinrichtung 400 umfasst eine hier vertikale Stange 405, welche fest in der übergeordneten, die Messvorrichtung umfassenden Prüfeinrichtung montiert ist, beispielsweise an einem Grundrahmen oder Grundgestell einer Maschine. An der Stange 405 sind Neigungssensoren 301, 302, 303 angebracht, mittels welcher die Neigung der Stange 405 und insbesondere Neigungsänderungen der Stange 405 ermittelbar sind.

Weiterhin sind vier Abstandssensoren 410 bis 413 an der Stange 405 angebracht, welche dazu ausgebildet sind, den Abstand der Stange 405 vom Träger 70, vom Halter 12 bzw. vom Messobjekt 11 zu erfassen. Die Abstandssensoren 410 bis 413 arbeiten bei dem dargestellten Ausführungsbeispiel mit Laserstrahlung, wie durch die horizontalen Linien verdeutlicht ist. Es können auch mehr als vier Abstandssensoren vorgesehen sein.

Eine in Fig. 1 nicht sichtbare weitere Stange der Positionsermittlungseinrichtung 400 ist in y-Richtung vom Träger 70 beabstandet angeordnet und ebenfalls mit drei Neigungssensoren und vier Abstandssensoren versehen. Es ist bevorzugt, dass pro Stange jeweils mindestens zwei Neigungssensoren und/oder mindestens zwei Abstandssensoren vorgesehen sind. Die Auswerteeinrichtung ist in der Lage, aus den Neigungswerten der an den Stangen angebrachten Neigungssensoren sowie aus den Abstandswerten der an den Stangen angebrachten Abstandssensoren jegliche Positionsänderungen des Trägers 70 und/oder des Halters 12 relativ zum Messobjekt 11 zu ermitteln und bei der Ermittlung der Formgenauigkeit der Bohrung 50 entsprechend zu berücksichtigen.

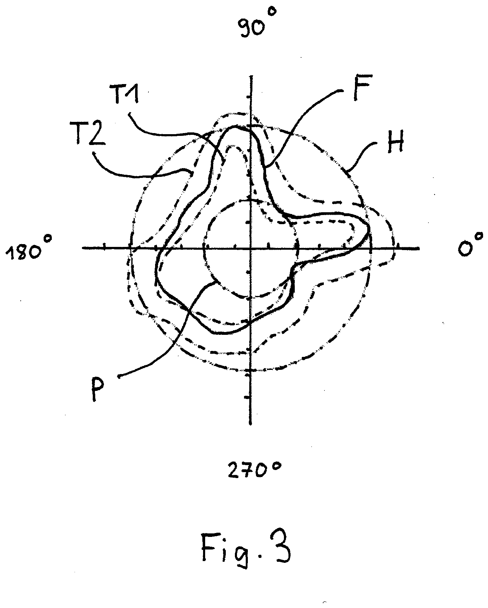

Fig. 3 zeigt den Formverlauf F einer ausgeprägt unrunden Bohrung in einer vorgegebenen Messebene. Der mittels eines der Abstandssensoren 5, 7, 8 (Fig. 1) ermittelte Formverlauf F ist als durchgezogene Linie dargestellt. Der durch die gestrichelten Linien T1, T2 begrenzte Bereich bezeichnet einen vorgegebenen Toleranzbereich für den Formverlauf F. Bei dem dargestellten Beispiel erfüllt die Bohrung nicht die vorgegebenen Anforderungen, wie in den unteren Quadranten des Diagramms zu erkennen ist. In Fig. 3 sind auch der Hüllkreis H sowie der Pferchkreis P für den Formverlauf F gezeigt - jeweils in strichpunktierter Linie. Es ist zu erkennen, dass bei dem dargestellten Beispiel die Bestimmung des Hüllkreises H sowie des Pferchkreises P allein nicht ausreicht, um die Güte der Bohrung angemessen zu charakterisieren.

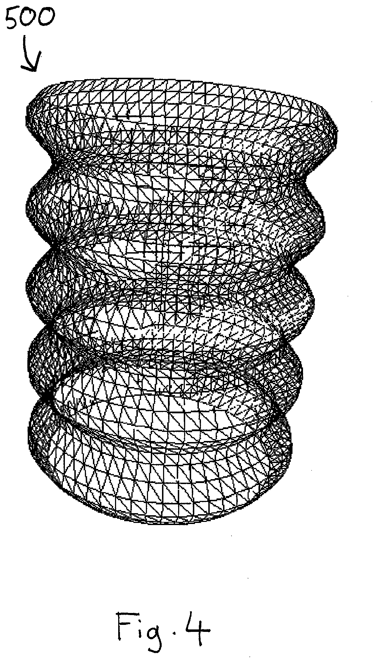

Zur Visualisierung des dreidimensionalen Formverlaufs der Bohrung 50 kann die Vermessung in mehreren über die Tiefe der Bohrung 50 verteilten Messebenen durchgeführt und anhand des Satzes von ebenen Formverläufen ein Gitternetz erstellt werden. Ein solches Gitternetz 500 ist in Fig. 4 gezeigt. Über unterschiedliche Einfärbungen kann visualisiert werden, in welchen Bereichen die gemessene Form innerhalb des Toleranzbereiches liegt und wo die gemessenen Werte zu groß oder zu klein sind.

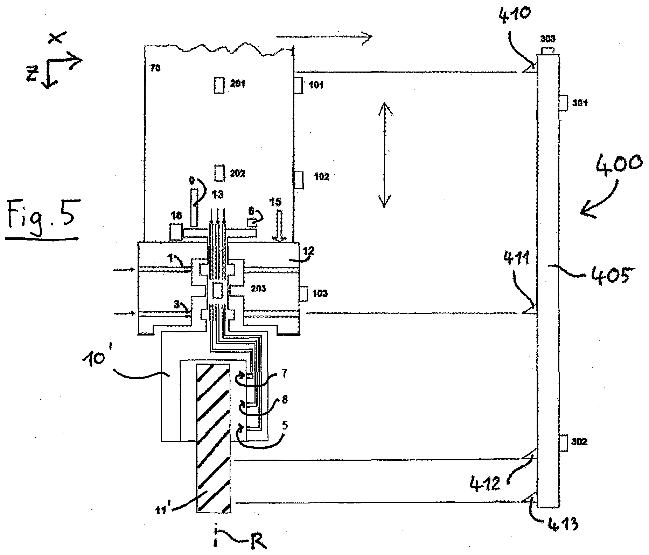

Bei der in Fig. 5 gezeigten alternativen Ausführungsform der Erfindung ist die Messsonde 10' als Messring ausgeführt, wobei die messsondenseitigen Abstandssensoren 5, 7, 8 in das Innere des Messrings gerichtet sind. Eine derartige Messsonde 10' ermöglicht insbesondere die Vermessung der Außenmaße eines spindelartigen Messobjekts 11'. Abgesehen von der Gestaltung der Messsonde 10' kann die in Fig. 5 dargestellte Messvorrichtung ebenso ausgebildet sein wie vorstehend unter Bezugnahme auf Fig. 1 beschrieben.

Insgesamt ermöglicht die Erfindung eine robuste, schnelle und exakte Messung des Formverlaufs beliebig geformter Messobjekte. Speziell können in vorteilhafter Weise beim Formhonen Bohrungen mit einer nicht zylindrischen Verzugsgeometrie oder beim Schleifen Spindeln mit komplexem Formverlauf vermessen werden. Eine Vermessungsvorrichtung ist auf einfache Weise in eine Fertigungsmaschine integrierbar. Von besonderem Vorteil ist die durch die Erfindung gegebene Möglichkeit, Bohrungsprüfungen vor Ort durchzuführen, ohne das Werkstück in ein Labor oder gar in einen Reinraum bringen zu müssen.

### Bezugszeichenliste

- 1, 3: halterseitiger Abstandssensor
- 5: messsondenseitiger Abstandssensor
- 6: Drehwinkelsensor
- 7: messsondenseitiger Abstandssensor
- 8: messsondenseitiger Abstandssensor
- 9: Linearschlitten
- 10, 10': Messsonde
- 11, 11': Messobjekt
- 12: Halter
- 17: Wand
- 50: Bohrung
- 70: Träger
- 75: Linearführung
- 101, 102, 103: in x-Richtung erfassender Beschleunigungssensor
- 120: am Messobjekt angebrachter Beschleunigungssensor
- 201, 202, 203: in y-Richtung erfassender Beschleunigungssensor
- 301,302,303: Neigungssensor
- 400: Positionsermittlungseinrichtung
- 405: Stange
- 410-413: Abstandssensor
- 500: Gitternetz
- R: Rotationsachse
- F: Formverlauf
- T1, T2: Toleranzbereich
- H: Hüllkreis
- P: Pferchkreis

## Patentansprüche

1. Verfahren zur industriellen Vermessung von Messobjekten (11, 11') wie Werkstücken, bei welchem eine drehbar an einem Halter (12) gelagerte Messsonde (10, 10') an das Messobjekt (11, 11') herangeführt wird, mittels wenigstens eines Abstandssensors (5, 7, 8) der momentane Abstand eines Bezugspunkts der Messsonde (10, 10') von einer Wand (17) des Messobjekts (11, 11') bestimmt wird und im Rahmen einer Messung wenigstens ein von dem Abstandssensor (5, 7, 8) bestimmter Abstandswert einer Drehstellung der Messsonde (10, 10') zugeordnet wird,
**dadurch gekennzeichnet, dass**
während der Messung auftretende Änderungen der Relativposition zwischen dem Halter (12) und dem Messobjekt (11, 11') bestimmt werden und anhand der bestimmten Änderungen der Relativposition zwischen dem Halter (12) und dem Messobjekt (11, 11') eine Korrektur der Messung durchgeführt wird.

2. Verfahren nach Anspruch 1,
**dadurch gekennzeichnet, dass**
zum Durchführen der Korrektur Eigenbewegungen des Halters (12) und/oder des Messobjekts (11, 11') kompensiert werden.

## Claims

1. A method for the industrial measurement of measurement objects (11, 11') such as workpieces, in which a measuring probe (10, 10') rotatably supported at a holder (12) is led up to the measurement object (11, 11'); in which the instantaneous distance of a reference point of the measuring probe (10, 10') from a wall (17) of the measurement object (11, 11') is determined by means of at least one distance sensor (5, 7, 8); and in which at least one distance value determined by the distance sensor (5, 7, 8) is associated with a rotary position of the measuring probe (10, 10') as part of a measurement,
**characterized in that**
changes in the relative position between the holder (12) and the measurement object (11, 11') occurring during the measurement are determined; and **in that** a correction of the measurement is carried out with reference to the determined changes in the relative position between the holder (12) and the measurement object (11, 11').

2. A method in accordance with claim 1,
**characterized in that**
movements of the holder (12) and/or of the measurement object (11, 11') are compensated for carrying out the correction.

## Revendications

1. Procédé de mesurage industriel d'objets à mesurer (11, 11'), tels que des pièces à oeuvrer, dans lequel une sonde de mesure (10, 10') montée mobile en rotation sur un élément de retenue (12) est rapprochée de l'objet à mesurer (11, 11'), la distance momentanée d'un point de référence de la sonde de mesure (10, 10') par rapport à une paroi (17) de l'objet à mesurer (11, 11') est déterminé au moyen d'au moins un capteur de distance (5, 7, 8), et dans le cadre d'un mesurage au moins une valeur de distance déterminée par le capteur de distance (5, 7, 8) est associée à une position de rotation de la sonde de mesure (10, 10'),
**caractérisé en ce que**
des modifications de la position relative entre l'élément de retenue (12) et l'objet à mesurer (11, 11'), qui apparaissent pendant le mesurage, sont déterminées, et
en se basant sur les modifications déterminées de la position relative entre l'élément de retenue (12) et l'objet à mesurer (11, 11'), une correction du mesurage est effectuée.

2. Procédé selon la revendication 1,
**caractérisé en ce que**
pour effectuer la correction, des mouvements propres de l'élément de retenue (12) et/ou de l'objet à mesurer (11, 11') sont compensés.
